# DEMANDE DE BREVET EUROPEEN

(11) **EP 4 779 498 A1**
(43) Date de publication de la demande: **22.07.2026**
(21) Numéro de dépôt: 25215478.6
(22) Date de dépôt: 13.11.2025
(51) Int. Cl.: G06F 16/957

(54) **NAVIGATION WEB**

(30) Priorité: 20.01.2025 FR 2500562
(71) Demandeur: Lisio, 81100 Castres (FR)
(72) Inventeur: Gayraud, Eric, 81100 CASTRES (FR); Garrido, Théo, 81100 Castres (FR)
(74) Mandataire: Froberger, Matthieu

(57) **Abrégé**

Des exemples présentent un procédé mis en œuvre par ordinateur, comprenant :
détecter (110) un évènement correspondant au pré-téléchargement d'une ressource durant l'interprétation d'un code en langage de balisage hypertexte d'une page web, ci-après désigné par code HTML de la page web ;
déterminer (120) si la ressource doit être téléchargée à partir d'au moins l'un parmi son type, son format, ou son poids ; et
autoriser (130a) ou interdire (130b) le téléchargement de la ressource.

## Description

### Domaine technique

La présente divulgation concerne le domaine de la navigation sur des sites web.

### Technique antérieure

La navigation sur des sites web est largement utilisée pour accéder à de l'information sur différents sujets. En particulier, pour accéder à de l'information sur un site web, un utilisateur utilise généralement un navigateur web. Le navigateur web permet d'établir une liaison avec un serveur web hébergeant le site web afin d'accéder aux données du site et permet par ailleurs d'afficher ces données sur le terminal de l'utilisateur.

La présente divulgation vient améliorer ce fonctionnement.

### Résumé

A cet égard, il est proposé un procédé mis en œuvre par ordinateur, comprenant :
détecter un évènement correspondant au pré-téléchargement d'une ressource durant l'interprétation d'un code en langage de balisage hypertexte d'une page web, ci-après désigné par code HTML de la page web ;
déterminer si la ressource doit être téléchargée à partir d'au moins l'un parmi son type, son format, ou son poids ; et
autoriser ou interdire le téléchargement de la ressource.

Optionnellement, déterminer si la ressource détectée doit être téléchargée à partir de son type peut comprendre :
obtenir le type de la ressource ; puis
comparer le type de la ressource avec une pluralité de types de ressources interdits ; et
lorsque le type de la ressource correspond à un type de ressources interdit,
interdire le téléchargement de la ressource.

Optionnellement, déterminer si la ressource détectée doit être téléchargée à partir de son poids peut comprendre :
obtenir un poids de la ressource à partir du code HTML de la page web ; puis comparer le poids de la ressource avec un seuil ; et
lorsque le poids de la ressource est supérieur au seuil, déterminer que la ressource ne doit pas être téléchargée, et
interdire le téléchargement de la ressource.

Optionnellement, obtenir un poids de la ressource à partir du code HTML de la page web peut comprendre :
envoyer, au serveur web hébergeant la ressource, une requête du protocole de transfert hypertexte, ci-après désignée par requête HTTP, afin d'obtenir une partie de la ressource ;
obtenir une réponse du serveur web à la requête HTTP ; et
déterminer le poids de la ressource à partir de la réponse obtenue du serveur web.

Optionnellement, obtenir un poids de la ressource à partir du code HTML de la page web peut comprendre :
envoyer, au serveur web hébergeant la ressource, une requête du protocole de transfert hypertexte, ci-après désignée par requête HTTP, afin d'obtenir des métadonnées associées à la ressource ;
obtenir une réponse du serveur web à la requête HTTP ; et
déterminer le poids de la ressource à partir de la réponse obtenue du serveur web.

Optionnellement, lorsque la ressource comprend un élément graphique destiné à être affiché sur la page web et que le téléchargement de cette ressource est interdit, le procédé peut en outre comprendre :
obtenir des dimensions de l'élément graphique ;
déterminer un élément graphique de substitution présentant les dimensions déterminées ; et
modifier le code HTML de la page web afin que l'élément graphique de substitution se positionne à l'emplacement de l'élément graphique lors d'un affichage de la page web.

Optionnellement, lorsque le téléchargement de la ressource est interdit, le procédé peut additionnellement comprendre :
obtenir un élément interactif à afficher sur la page web qui, lorsqu'il est actionné,
permet d'autoriser le téléchargement de la ressource.

Optionnellement, le procédé peut en outre comprendre suite à l'actionnement de l'élément interactif autorisant le téléchargement de la ressource :
un envoi, à un serveur web spécifique, d'une instruction de téléchargement de la ressource ; puis
une réception, du serveur web spécifique, de la ressource préalablement compressée par le serveur web spécifique.

La demande porte en outre sur un produit programme d'ordinateur comportant des instructions pour la mise en œuvre de l'un quelconque des procédés présentés par la présente divulgation lorsque ce programme est exécuté par un dispositif de traitement de données, notamment un processeur. Ce produit programme d'ordinateur peut par exemple correspondre à une fonction native d'un navigateur web implémentée par un dispositif de traitement de données, notamment un processeur, ou encore correspondre à une extension de navigateur adaptée pour être mise en œuvre par un navigateur web.

Enfin, la demande porte sur un support d'enregistrement non transitoire lisible par un ordinateur sur lequel est enregistré un programme pour la mise en œuvre de l'un quelconque des procédés présentés par la présente divulgation lorsque ce programme est exécuté par un processeur.

### Brève description des dessins

D'autres caractéristiques, détails et avantages apparaîtront à la lecture de la description détaillée ci-après, et à l'analyse des dessins annexés, sur lesquels :
[Fig.1] représente schématiquement un exemple de dispositif de traitement de données.
[Fig.2] représente schématiquement un exemple de procédé.
[Fig.3] représente schématiquement un autre exemple de procédé.
[Fig.4] représente schématiquement des alternatives de mises en œuvre d'une opération d'un exemple de procédé.
[Fig.5] représente schématiquement encore un autre exemple de procédé.
[Fig.6] représente schématiquement des alternatives de mises en œuvre d'une opération d'un autre exemple de procédé.
[Fig.7] représente schématiquement encore un autre exemple de procédé.
[Fig.8] représente schématiquement encore un autre exemple de procédé.
[Fig.9] représente schématiquement des alternatives de mises en œuvre d'une opération d'encore un autre exemple de procédé.
[Fig.10] représente schématiquement encore un autre exemple de procédé.
[Fig.11] représente schématiquement encore un autre exemple de procédé.

### Description des modes de réalisation

La présente divulgation propose une solution qui permet à un utilisateur de naviguer sur le web par le biais de son navigateur web en réduisant son impact carbone (i.e. la quantité de CO₂ émise) lors de sa navigation. Plus précisément, la présente divulgation propose une solution permettant de réduire la quantité de données chargées par un navigateur web lors de la consultation d'une page web. Le fait de réduire la quantité de données chargées par un navigateur web lors de la consultation d'une page web permet de réduire la consommation d'énergie des équipements réseaux impliqués dans le chargement des données de la page par le navigateur, et donc de réduire la quantité de CO2 émise par ces équipements lorsqu'un utilisateur souhaite consulter cette page. En l'occurrence, une donnée chargée par un navigateur lors de la consultation d'une page web implique une transmission d'un signal électrique, signal lumineux (fibre optique) ou d'une onde électromagnétique transportant cette donnée vers le navigateur depuis un équipement réseau qui la stocke (la donnée transitant éventuellement par d'autres équipements réseaux entre ces deux points). Par conséquent, le fait de réduire la quantité de données chargées par un navigateur web lors de la consultation d'une page web permet de réduire le nombre de signaux électriques, de signaux lumineux et d'ondes électromagnétiques émises par chacun des équipements réseaux impliqués dans le transfert de ces données, réduisant ainsi l'énergie demandée à ces équipement réseaux, et réduisant de ce fait l'impact carbone de l'utilisateur lorsqu'il consulte la page.

En particulier, la solution proposée consiste à filtrer certaines données du contenu d'une page web afin qu'elles ne soient pas téléchargées par le navigateur web de l'utilisateur lorsqu'il accède à cette page web, et ce, tout en limitant le filtrage d'informations pertinentes pour la compréhension du contenu de la page. De manière accessoire, cela permet également à plus d'utilisateurs d'avoir accès en simultané aux contenus pertinents de plus de pages web dans des zones géographiques présentant un débit réseau limité et insuffisant, et donc d'augmenter le débit réseau local sans augmenter les infrastructures électroniques impliquées dans le transport de l'information, et sans augmenter l'impact carbone lié à la production, à l'installation, au fonctionnement et au recyclage de ces infrastructures

En l'occurrence, les inventeurs ont remarqué que les informations pertinentes disponibles sur les pages web pouvaient correspondre à une quantité de données faible au regard de la quantité de données totales contenues dans ces pages web et chargées par le navigateur web lors de leur consultation. Les inventeurs ont en particulier noté que certaines données chargées par le navigateur lors de l'accès à une page web étaient d'un intérêt limité et étaient même parfois inutiles à la compréhension du contenu de la page web consultée par l'utilisateur. Par conséquent, le fait de filtrer ces données avant qu'elles ne soient téléchargées par le navigateur web permet, tout en conservant l'essentiel de l'information pertinente de la page, de réduire la quantité de données téléchargées par le navigateur et donc de réduire l'impact carbone de l'utilisateur lors de la consultation d'une page web. Cela permet en outre à un utilisateur ayant une quantité de données disponibles limitée, notamment limitée par un engagement contractuel avec son fournisseur d'accès internet (FAI), de filtrer les données des pages web d'importance moindre pour la compréhension du contenu de ces pages. Ainsi, l'utilisateur pourra, pour une même quantité de données disponible, charger davantage de contenus pertinents.

Par ailleurs, en inventant cette solution pour réduire l'impact carbone de la navigation web, les inventeurs se sont aperçus que le filtrage de certaines données d'une page web pouvait déstructurer le contenu de cette page et pouvait rendre la compréhension de l'information présentée plus difficile. Dans cette mesure, la présente divulgation propose également, dans certains exemples, une solution permettant au moins d'atténuer cet effet. Cette solution peut consister à représenter, aux emplacements des données filtrées de la page web, des éléments de substitution, avantageusement beaucoup moins lourds (en termes de quantité de données) que les données filtrées, permettant ainsi de conserver la structure de la page de façon à faciliter la compréhension de son contenu. On comprend donc que, dans ces exemples, la solution proposée par la présente divulgation permet de réduire l'impact carbone de la consultation d'une page web par un utilisateur via le filtrage de certaines données tout en atténuant l'impact qui pourrait être provoquée par ce filtrage sur la compréhension du contenu de cette page pour l'utilisateur.

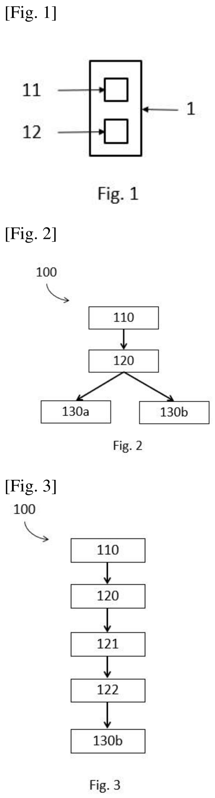

Il est maintenant décrit en référence à la [Fig.1] un exemple de dispositif de traitement de données 1 configuré pour mettre en œuvre les traitements décrits dans la présente divulgation et permettant notamment la mise en œuvre des exemples de procédé 100 qui seront détaillés dans la suite.

Le dispositif de traitement de donnés 1 peut comprendre un processeur 11 et une mémoire 12. Le processeur 11 peut être adapté pour mettre en œuvre les traitements décrits dans la présente divulgation, en particulier les exemples de procédé 100. Le processeur 11 peut par exemple être un microprocesseur. Le processeur 11 peut notamment être un composant d'un circuit intégré, par exemple un composant d'un microcontrôleur, un composant d'un FPGA (Field-Programmable Gate Array) ou un composant d'un ASIC (Application-Specific Integrated circuit).

La mémoire 12 peut stocker des instructions de code exécutées par le processeur 11. La mémoire 12 peut par exemple comprendre une mémoire ROM (Read-Only Memory), une mémoire RAM (Random Access Memory), une mémoire EEPROM (Electrically Erasable Programmable Read-Only Memory) ou tout autres types de moyens de stockage adaptés. La mémoire peut par exemple comprendre des moyens de stockage optique, électronique ou encore magnétique.

Le dispositif de traitement de données 1 est en particulier utilisé pour implémenter un navigateur web. Un navigateur web, également désigné « *browser »* en anglais, correspond à une unité logicielle notamment conçue pour consulter et afficher le Word Wide Web. Le navigateur correspond ainsi à un logiciel implémenté par le dispositif de traitement de données 1, notamment par son processeur 11, mettant en œuvre des requêtes conformes au protocole HTTP (Hypertext Transfer Protocol), bien connu de la personne du métier, et permettant de se connecter à des serveurs utilisant le protocole HTTP, ci-après désignés par serveurs web. Notamment, le protocole HTTP pourra être désigné en français par protocole de transfert hypertexte dans la présente divulgation.

Le navigateur web peut par exemple correspondre aux navigateurs connus du grand public. En particulier, la solution selon la présente divulgation peut se présenter sous la forme d'une extension d'un navigateur web ou d'une fonction native d'un navigateur web. En d'autres termes, la solution proposée par la présente divulgation peut être comprise dans un navigateur web proposée au téléchargement pour les utilisateurs ou peut être ajoutée à un navigateur web via le téléchargement additionnel d'une extension (parfois désignée par module) de navigateur web. Ces modules ou extensions de navigateurs web peuvent notamment être désignés par « add-ons » ou « browser extensions » dans la littérature anglaise. Dans ces deux alternatives, la solution peut ainsi prendre la forme d'un produit programme d'ordinateur qui peut être téléchargé et implémenté par un circuit de calcul, par exemple par un processeur tel que le processeur 11.

Le dispositif de traitement de données 1 peut par exemple correspondre à une partie d'un terminal à partir duquel un utilisateur accède au navigateur web. Un tel terminal peut par exemple correspondre à un ordinateur, une tablette ou encore un téléphone sur lequel est installé le navigateur.

Un exemple de procédé 100 est désormais décrit en référence à la [Fig.2]. Le procédé 100 peut être mis en œuvre par le dispositif de traitement de données 1, notamment par son processeur 11 le cas échéant. Le procédé 100 peut également être mis en œuvre par plusieurs unités de calculs distribuées, de sorte que les opérations du procédé 100 qui seront détaillées dans la suite ne sont pas nécessairement toutes mises en œuvre par un même processeur, mais peuvent être mises en œuvre par plusieurs processeurs agissant ensemble, et communiquant éventuellement des données entre eux. En particulier, le procédé est destiné à réduire l'empreinte carbone de la consultation d'une page web.

Il doit être noté que les figures associées aux exemples de procédé 100 ne sont que des illustrations des exemples du procédé 100 représentant, par des blocs, les différentes opérations éventuellement comprises dans le procédé et décrites dans la suite du document. À ce titre, les illustrations ne traduisent aucune séquentialité entre les opérations. En d'autres termes, les opérations décrites en référence aux figures ne sont pas nécessairement mises en œuvre les unes à la suite des autres et peuvent notamment être mises en œuvre dans un ordre différent de celui représenté sur les figures, ou être mises en œuvre de manière parallèle, à moins qu'une opération donnée nécessite un résultat d'une autre opération pour être mise en œuvre. De la même façon, il n'est pas nécessaire que chaque opération soit mise en œuvre une fois avant qu'une même opération soit répétée une deuxième fois. La fréquence de mise en œuvre de chaque opération lui est propre et n'est pas nécessairement liée à la mise en œuvre des autres opérations.

Comme illustré sur la [Fig.2], le procédé 100 comprend ainsi une opération 110 de détection d'un évènement correspondant au pré-téléchargement d'une ressource durant l'interprétation d'un code en langage de balisage hypertexte d'une page web.

Une des fonctions d'un navigateur web est notamment, en plus d'obtenir le fichier comprenant le code en langage de balisage hypertexte d'une page web, d'interpréter ce fichier afin de pouvoir afficher le contenu de la page web sur le terminal avec lequel l'utilisateur navigue sur le web. Le code en langage de balise hypertexte d'une page web est plus couramment appelé code HTML (pour HyperText Markup Language en anglais) de la page web.

Lors de l'interprétation du code HTML d'une page web par le navigateur web, il est courant que le navigateur web soit amené à télécharger des ressources qui doivent être ajoutées à la page web. L'opération 110 permet de détecter un évènement de pré-téléchargement d'une ressource, c'est-à-dire de détecter un évènement indiquant que le code HTML de la page web demande le téléchargement d'une ressource, avant que cette ressource ne soit effectivement téléchargée. Il est par conséquent possible, à partir de cette détection, d'autoriser ou d'interdire le téléchargement de la ressource, comme cela sera détaillé dans la suite. On comprend ainsi que lorsque la ressource n'est pas téléchargée par le navigateur, la quantité de données téléchargées par ce dernier pour afficher la page web est réduite, ce qui réduit donc l'impact carbone de la consultation de cette page web par l'utilisateur. Par ailleurs, on comprend également que bien que le procédé 100 soit présenté pour une ressource d'une page web, il pourrait être appliqué pour chaque ressource de la page web afin de déterminer si chacune de ces ressources doit ou non être téléchargée.

Dans la présente divulgation, un téléchargement ou un chargement d'une ressource d'une page web désigne le fait de transférer la ressource de la page web depuis un serveur web sur laquelle elle est stockée vers un navigateur web demandant cette ressource. A la suite de ce téléchargement, la ressource est donc également stockée dans un dossier associé du navigateur web, c'est-à-dire que la ressource est stockée sur le terminal (par exemple un ordinateur, une tablette ou un téléphone portable) mettant en œuvre le navigateur web.

Par ailleurs, une ressource d'une page web peut désigner, dans la présente divulgation, tout élément référencé dans le code HTML d'une page web pouvant être téléchargé depuis un serveur web par un navigateur web à partir d'une requête conforme au protocole HTTP.

Une ressource d'une page web peut par exemple être associée à une adresse web. L'adresse web peut correspondre, dans la présente divulgation, à ce qui est désigné par l'Uniform Resource Locator (URL) en anglais, c'est-à-dire à une adresse normalisée permettant de désigner l'emplacement d'un élément, notamment l'emplacement d'une ressource sur le réseau web.

En particulier, lorsqu'il est détecté un évènement de pré-téléchargement d'une ressource, il peut être également obtenu l'adresse web (l'URL) de la ressource à télécharger, laquelle pourra être utilisée pour déterminer si cette ressource doit ou non être téléchargée. Notamment, l'adresse web de la ressource à télécharger peut être fournie en entrée de la fonction détectant l'évènement de pré-téléchargement de la ressource. Ainsi, lorsqu'il est détecté un pré-téléchargement d'une ressource, cette détection peut également permettre de récupérer l'adresse web de la ressource à télécharger.

Une ressource d'une page web peut également être associée à un type. Le type de la ressource détaille le contenu de la ressource, i.e. ce que cette ressource contient. Une ressource d'une page web spécifique peut ainsi être associée à un type parmi les types suivants :
une ressource textuelle, par exemple un fichier de type CSS ou un fichier permettant l'exécution d'un script ;
une ressource multimédia, par exemple un fichier image, un fichier vidéo ou un fichier audio ; et
une ressource intégrée, par exemple un objet intégré, notamment un fichier intégré dans un format déjà lisible par l'utilisateur, ou une page intégrée dans le code HTML de la page web spécifique.

Le type d'une ressource d'une page web peut être obtenu à partir du code HTML de la page web, notamment à partir des informations contenues dans la balise associée à la ressource dans le code HTML. Le type de la ressource peut par exemple correspondre à un attribut de la balise qui définit la ressource dans le code HTML. Le type de la ressource à télécharger peut par exemple être fourni en entrée de la fonction détectant l'évènement de pré-téléchargement de la ressource. Ainsi, lorsqu'il est détecté un pré-téléchargement d'une ressource, cette détection peut également permettre de récupérer le type de la ressource à télécharger.

Une ressource d'une page web peut également être associée à un format. Un format d'une ressource peut désigner un standard qui définit la manière dont les informations d'un fichier de ressource sont codées pour être stockées et transmises. Le format de la ressource dépend de son type. Le format d'une ressource peut être obtenu à partir du code HTML de la page web, et peut par exemple être compris dans un attribut associé au type de la ressource dans les informations définissant la ressource présentes dans le code HTML.

Des exemples de format de données d'une ressource de type image peuvent par exemple comprendre les formats JPEG, PNG, AVIF ou encore WEBP. Des exemples de format de données d'une ressource de type vidéo peuvent par exemple comprendre les formats MOV, MP4, AVI ou encore WEBM. Des exemples de format de données d'une ressource de type audio peuvent par exemple comprendre les formats MP3, FLAC, AAC. Bien entendu, d'autres formats connus de la personne du métier peuvent être considérés au-delà des exemples présentés ci-dessus et pour d'autres types de ressources.

La fonction permettant de détecter le pré-téléchargement d'une ressource associée à une page web lors de l'interprétation de cette page par un navigateur web dépend du navigateur web utilisé. La personne du métier pourra retrouver la fonction adaptée au navigateur qu'il souhaite utiliser dans la documentation associée à ce navigateur. Notamment, ce type de fonction permet généralement de surveiller l'apparition d'un évènement donné (ici un évènement de pré-téléchargement d'une ressource) et de déclencher l'exécution d'instructions de code informatique lorsque cet évènement est détecté. Par conséquent, les opérations décrites dans la suite du document peuvent être mises en œuvre par des instructions de code informatique dont l'exécution est déclenchée lorsqu'un évènement de pré-téléchargement d'une ressource est détecté (i.e. lorsque l'opération 110 est mise en œuvre).

Comme illustré sur la [Fig.2], le procédé 100 comprend une opération 120 consistant à déterminer si la ressource détectée lors de l'opération 100 doit être téléchargée à partir d'au moins l'un parmi son type, son format ou son poids. En d'autres termes, il peut être utilisé le type, et/ou le format et/ou le poids de la ressource pour déterminer si cette ressource doit être ou non téléchargée.

Le poids d'une ressource peut désigner la taille que cette ressource occupe dans une mémoire. En d'autres termes, le poids d'une ressource peut par exemple désigner la taille de cette ressource en bits ou en octets. Le poids est donc une forme de mesure objective de l'empreinte carbone de la ressource, si cette ressource devait être téléchargée, puisqu'il traduit directement la quantité de données à transmettre depuis le serveur web stockant cette ressource vers le navigateur web.

Cette opération 120 représente une difficulté technique particulière dans la mesure où il s'agit de déterminer, sans pour autant télécharger la ressource et en téléchargeant le moins de données possibles, voire en ne téléchargement aucune autre données que celles à disposition, si cette ressource peut présenter un intérêt suffisant pour la compréhension de la page web par l'utilisateur au regard de son empreinte carbone. En effet, chaque donnée téléchargée supplémentaire augmente l'empreinte carbone de la consultation de la page web, il est donc impératif de réduire autant que possible la quantité de données téléchargées pour que le procédé soit le plus efficace possible. Les inventeurs ont donc astucieusement considéré le poids, le type ou le format de la ressource pour opérer cette détermination puisque ces données peuvent être déjà présentes dans le code HTML de la page web qui est nécessairement téléchargé pour consulter cette page, de sorte qu'il n'est pas forcément demandé de télécharger d'autres données que ce code pour opérer cette détermination.

Comme illustré sur la [Fig.2], le procédé 100 comprend une opération d'autorisation ou d'interdiction du téléchargement de la ressource, par exemple en fonction de l'opération 120 de détermination précédente. L'opération d'autorisation est représentée par le bloc 130a sur les figures tandis que l'opération d'interdiction est représentée par le bloc 130b. Ainsi, lorsqu'il a été déterminé lors de l'opération 120 que la ressource ne devait pas être téléchargée, son téléchargement peut être interdit 130b au navigateur. A l'inverse, lorsqu'il a été déterminé que la ressource devait être téléchargée, son téléchargement peut être autorisé 130a au navigateur.

Interdire 130b un téléchargement de la ressource peut par exemple comprendre une exécution d'instructions de code informatique bloquant le téléchargement de cette ressource par le navigateur. Ainsi, le blocage du téléchargement peut correspondre à l'exécution d'instructions de code informatique spécifiquement déclenchée en fonction de l'opération 120 de détermination.

Autoriser 130a un téléchargement de la ressource peut par exemple comprendre une exécution d'instructions de code informatique permettant de télécharger la ressource. L'autorisation du téléchargement n'est pas nécessairement une exécution d'instructions de code informatique spécifiquement déclenchée sur la base de l'opération 120 mais peut simplement correspondre à l'exécution d'une fonction de téléchargement de la ressource proposée par le navigateur web, faisant suite à l'évènement de pré-téléchargement, qui ne serait pas interrompue dans son exécution.

Le procédé 100 proposé par la présente divulgation permet donc de réduire l'impact carbone de la consultation d'une page web par un utilisateur tout en lui permettant d'accéder à l'information pertinente de la page en filtrant astucieusement certaines ressources de la page web, notamment des ressources pouvant présenter une importance relative pour la compréhension du contenu de la page par l'utilisateur. Par ailleurs, dans la mesure où le procédé permet de filtrer un certain nombre de données lors de la consultation d'une page web, il permet accessoirement de faciliter l'accès à son contenu même dans des zones de faible débit réseau.

D'autres opérations peuvent être optionnellement intégrées au procédé 100 et sont présentées dans la suite de la présente divulgation. Ces opérations peuvent être intégrées au procédé 100 en combinaison les unes avec les autres sauf lorsque le contraire est expressément explicité dans la présente divulgation.

Dans des premiers exemples dans lesquels l'opération 120 permettant de déterminer si la ressource doit être téléchargée utilise le type de la ressource pour opérer cette détermination, le procédé peut comprendre deux opérations supplémentaires 121 et 122. Ces premiers exemples sont notamment illustrés en [Fig.3].

L'opération 121 correspond à l'obtention du type de la ressource.

L'opération 122 correspond quant à elle à la comparaison du type de la ressource avec une pluralité de types de ressources interdits.

Ainsi, lorsqu'une correspondance est établie entre le type de la ressource considérée et un type de ressources interdit, le téléchargement de la ressource est interdit, comme illustré par le bloc 130b sur la [Fig.3].

La pluralité de types de ressources interdits peut être stockée dans une mémoire accessible pour le dispositif de traitement de données 1 lorsque ce dernier met en œuvre le procédé, par exemple la mémoire 12 du dispositif 1. De cette façon, le type de la ressource considérée (i.e. la ressource pour laquelle un évènement de pré-téléchargement a été détecté lors de l'opération 110) peut être comparé aux types de ressources interdits de la pluralité.

La pluralité de types de ressources interdits peut notamment comprendre des ressources de types multimédia, en particulier des ressources de type image, de type vidéo ou encore de type audio. Les inventeurs ont en effet remarqué que ces types de données en particulier représentaient généralement un intérêt limité (ou étaient simplement inutiles) à la compréhension du contenu de la page web consultée par l'utilisateur, alors qu'ils présentent un poids important du fait de la nature de l'information qu'ils contiennent.

On comprend par ailleurs qu'une pluralité de types de ressources autorisés peut également être utilisée pour opérer le même fonctionnement. Auquel cas, l'opération 122 pourrait correspondre à une comparaison d'un type de la ressource avec une pluralité de types de ressources autorisés et ce serait lorsque le type de la ressource est différent des types de ressources autorisés de la liste que le téléchargement serait interdit.

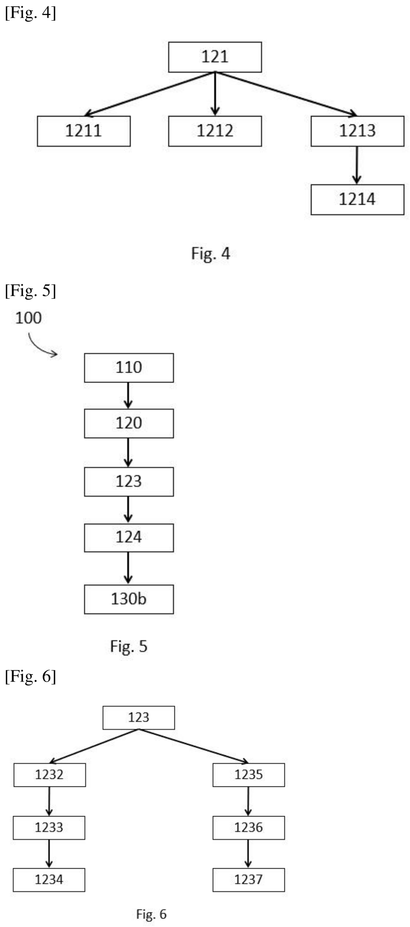

Plusieurs options peuvent être utilisées pour obtenir le type de la ressource, notamment lors de l'opération 121. Ces options seront présentées ci-après en référence à la [Fig.4].

Dans une première option représentée par le bloc 1211, le type de la ressource de la page web peut être obtenu lorsque l'évènement correspondant au pré-téléchargement de la ressource est détectée durant l'opération 110. Ainsi, dans cette première option, la fonction du navigateur permettant de détecter un évènement de pré-téléchargement fournit, en plus de détecter la ressource, le type de cette ressource.

Dans une deuxième option représentée par le bloc 1212, le type de la ressource peut être obtenu à partir du code HTML de la page web, et notamment des informations comprises dans la balise associée à la ressource dans le code HTML. Dans cette deuxième option, l'opération de détection 110 d'un évènement de pré-téléchargement de cette ressource peut ainsi déclencher l'exécution d'instructions de code permettant d'obtenir le type de la ressource à partir du code HTML, par exemple en traitant les informations comprises dans une balise associée à la ressource dans le code HTML de la page web.

En particulier, le type de la ressource peut directement être indiqué par une balise HTML (par exemple par une balise de type image ou vidéo) ou il peut être déterminé à partir d'un format de la ressource qui permet de reconnaitre le type de la ressource. Notamment, un fichier présentant une extension JPEG, PNG, AVIF ou encore WEBP peut permettre de déterminer qu'il s'agit d'une image. Un fichier présentant une extension MOV, MP4, AVI ou encore WEBM peut permettre de déterminer qu'il s'agit d'une vidéo. Un fichier présentant une extension MP3, OGG, FLAC, AAC peut permettre de déterminer qu'il s'agit d'un audio. Bien entendu, d'autres formats connus de la personne du métier peuvent être considérés au-delà des exemples présentés ci-dessus.

Dans une troisième option représentée par les blocs 1213 et 1214, le type de la ressource peut être obtenu à partir d'une adresse web de la ressource dans le code HTML de la page web. En particulier, dans cette troisième option, le bloc 1213 correspond à l'obtention de l'adresse web de la ressource dans le code HTML et l'opération 1214 correspond à une détermination du type de la ressource à partir de son adresse web.

Le type de la ressource peut notamment être déterminé à partir d'une analyse syntaxique de l'adresse web de la ressource, par exemple en détectant la présence d'une chaine de caractères particulières reconnue et associée au type de ressource. Notamment, l'adresse web de la ressource peut comprendre une chaine de caractères associée au format de la ressource, par exemple dans l'extension de l'adresse web, et ce format peut ainsi permettre de déterminer le type de cette ressource.

On comprend que les premiers exemples de l'opération 120 dans lesquels le filtrage des données est effectué sur la base du type de la ressource constituent donc une forme de filtrage stricte puisque l'ensemble des ressources appartenant à certains types sont filtrés.

Dans des deuxièmes exemples dans lesquels l'opération 120 permettant de déterminer si la ressource doit être téléchargée utilise le poids de la ressource pour opérer cette détermination, le procédé peut comprendre deux opérations supplémentaires 123 et 124. Ces deuxièmes exemples sont notamment illustrés en [Fig.5].

L'opération 123 correspond à une obtention d'un poids de la ressource à partir du code HTML de la page.

L'opération 124 correspond à une comparaison du poids de la ressource avec un seuil.

Enfin, lorsque le poids de la ressource est supérieur au seuil, le téléchargement de la ressource est interdit, comme illustré par le bloc 130b sur cette figure. En accédant au poids de la ressource, il est donc possible de discriminer les ressources qui présentent un poids considéré comme trop important pour l'empreinte carbone de l'utilisateur.

Dans des exemples, le seuil peut par exemple être déterminé comme une proportion du poids du code HTML de la page web consultée. De cette façon, le seuil permet de garantir que des ressources lourdes au regard du poids du code HTML de la page web ne sont pas téléchargées en plus de ce code. Dans ces exemples, on comprend donc que le seuil est un seuil dynamique qui dépend de la page web consultée.

Dans d'autres exemples, le seuil peut être un seuil fixe (i.e. constant pour différentes pages web), notamment déterminé afin de filtrer des ressources multimédias. En effet, les inventeurs ont intelligemment remarqué que la majorité du contenu multimédia des pages web présentaient une valeur ajoutée relativement faible sur la compréhension du contenu de la page par l'utilisateur alors même que ce sont ces ressources qui présentent généralement le poids le plus lourd. Par conséquent, le fait de filtrer au moins en partie ces ressources multimédia permet d'alléger sensiblement la quantité de données à télécharger par l'utilisateur lorsqu'il consulte une page web, réduisant ainsi l'empreinte carbone de cette action.

Le seuil peut par exemple être défini comme supérieur ou égal à 50 kilo-octets, avantageusement supérieur ou égal à 90 kilo-octets. Le seuil peut notamment être compris entre 70 et 130 kilo-octets. Le seuil peut par exemple correspondre à 100 kilo-octets.

La présente divulgation propose plusieurs options pour déterminer le poids d'une ressource d'une page web. Ces options sont notamment illustrées sur la [Fig.6].

Dans une première option, l'opération 123 d'obtention d'un poids de la ressource à partir du code HTML de la page web peut comprendre trois opérations 1232, 1233 et 1234 supplémentaires. Le principe de cette première option consiste à utiliser astucieusement une fonction du protocole HTTP permettant de télécharger une petite quantité de données de la ressource auprès du serveur web hébergeant cette ressource et d'utiliser la réponse du serveur web afin de déterminer le poids total de cette ressource. On comprend ainsi que dans cette option, l'adresse web de la ressource référencée dans le code HTML de la page peut être utilisée pour interroger le serveur web hébergeant cette ressource avec la fonction du protocole HTTP appropriée.

Ainsi, l'opération 1232 correspond à un envoi, à destination du serveur hébergeant la ressource, d'une requête HTTP afin d'obtenir une partie de la ressource. Il s'agit donc dans cette opération d'envoyer une requête au serveur afin d'obtenir une portion de la ressource, qui, par définition, présente un poids inférieur à celui de la ressource. La partie de la ressource demandée peut être déterminée à partir d'une quantité minimale de données pouvant être obtenue par la requête HTTP correspondante (sous réserve que le navigateur web utilisé supporte le format de données demandé lors de la requête). Des détails sur la requête HTTP à utiliser sont notamment présentées dans la RFC 7233. Il peut en particulier s'agir d'une requête HTTP dite « GET » comprenant un argument « range » et c'est dans cet argument « range » que peut être désignée la partie de la ressource à obtenir.

L'opération 1233 correspond à une obtention d'une réponse du serveur web à la requête HTTP transmise pendant l'opération 1232. En l'occurrence, les inventeurs ont astucieusement noté que lorsqu'une partie de la ressource était téléchargée à l'aide de la requête adaptée du protocole HTTP, la réponse du serveur à cette requête comprenait, dans son en-tête, à la fois la quantité de données téléchargée demandée et la quantité de données totale de la ressource (i.e. son poids). Ainsi, en demandant à télécharger seulement une partie minime de la ressource, la réponse du serveur à cette requête permet d'obtenir le poids de la ressource et permet donc de déterminer si cette ressource doit ou non être téléchargée.

L'opération 1234 correspond ainsi à déterminer le poids de la ressource à partir de la réponse obtenue du serveur web lors de l'opération 1233. Notamment, la réponse du serveur web à la requête HTTP envoyée pendant l'opération 1232 peut comprendre un champ appelé « content range » dans lequel le poids de la ressource peut être retrouvé.

Dans une deuxième option, l'opération 123 d'obtention d'un poids de la ressource à partir de son adresse web peut comprendre trois opérations 1235, 1236 et 1237. Le principe de cette deuxième option consiste à obtenir des métadonnées de la ressource et déterminer le poids de cette ressource à partir de ces métadonnées.

Ainsi, l'opération 1235 correspond à un envoi, à destination du serveur hébergeant la ressource, d'une requête HTTP afin d'obtenir des métadonnées associées à la ressource, par exemple pour obtenir des données relatives à l'en-tête de la ressource. La requête HTTP peut notamment correspondre à une méthode dite « HEAD » qui demande à obtenir en réponse un en-tête associé à la ressource, l'en-tête comprenant des métadonnées de cette ressource. Il est à noter que la méthode HEAD permet d'éviter de télécharger des données de la ressource en elle-même de sorte qu'elle est plus efficace que la première option du point de vue de l'empreinte carbone. Toutefois, la réponse du serveur à cette requête HTTP ne comprend pas toujours le poids de la ressource qui est une donnée facultative.

L'opération 1236 correspond à une obtention d'une réponse du serveur web à la requête HTTP transmise pendant l'opération 1235. Les métadonnées comprises dans la réponse du serveur web à la requête HTTP peuvent ainsi comprendre le poids de la ressource.

L'opération 1237 correspond enfin à déterminer le poids de la ressource à partir de la réponse obtenue du serveur web lors de l'opération 1236. Le poids peut ainsi être déterminé à partir de la réponse du serveur web à la requête HTTP envoyée pendant l'opération 1235. Notamment, dans des exemples dans lesquelles les métadonnées sont obtenues à partir de la méthode HEAD, la réponse du serveur peut comprendre un champ appelé « content lenght » dans lequel il peut être retrouvé le poids de la ressource.

La deuxième option peut être utilisée alternativement à la première option. Elle peut éventuellement être utilisée pour confirmer le poids déterminé par la première option.

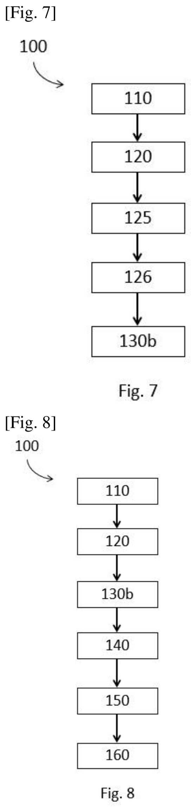

Dans des troisièmes exemples dans lesquels l'opération 120 permettant de déterminer si la ressource doit être téléchargée utilise le format de la ressource pour opérer cette détermination, le procédé peut comprendre deux opérations 125 et 126 supplémentaires. Ces troisièmes exemples sont notamment illustrés en [Fig.7].

L'opération 125 correspond à une obtention du format de la ressource à partir du code HTML de la page web.

Le format de la ressource peut notamment être obtenu à partir d'un traitement du code HTLM, en particulier à partir d'une analyse du code HTLM compris dans la balise définissant la ressource dans ce code HTLM. Notamment, le code HTML encadrant la ressource peut inclure un attribut associé au type de la ressource, lequel attribut peut indiquer le format de cette ressource. Par ailleurs, l'adresse web de la ressource peut également comprendre une chaine de caractères associée au format de la ressource, par exemple dans l'extension de l'adresse web. Ainsi, en analysant la syntaxe de l'adresse web de la ressource ou du code HTML associé à la ressource, on peut déterminer son format.

L'opération 126 correspond à la comparaison du format de la ressource avec une pluralité de formats de ressources autorisés.

Ainsi, lorsque le format de la ressource est différent des formats de ressources autorisés de la pluralité, le téléchargement de la ressource est interdit, comme illustré par le bloc 130b sur la [Fig.7].

Tout comme la pluralité de types de ressources interdits, la pluralité de formats de ressources autorisés peut être stockée dans une mémoire accessible pour le dispositif de traitement de données 1 lorsque ce dernier met en œuvre le procédé, par exemple la mémoire 12 du dispositif 1. De cette façon, le format de la ressource considérée peut être comparé aux formats de ressources autorisés.

La pluralité de formats de ressources autorisés peut notamment comprendre des formats de données compressées, et notamment des formats de données multimédia compressées. En effet, de nombreux formats sont désormais disponibles pour des ressources et certains de ces formats correspondent à des formats de données compressées de sorte que le poids de la ressource dans un format compressé, par rapport à un format de données non compressées, est inférieur.

Dans des exemples, pour les ressources de types image, des formats de données compressées pouvant appartenir à la pluralité de formats de ressources autorisés peuvent comprendre au moins l'un parmi les formats WEBP ou AVIF.

Dans des exemples, pour les ressources de types vidéo, des formats de données compressées pouvant appartenir à la pluralité de formats de ressources autorisés peuvent comprendre au moins l'un parmi les formats WEBM ou MP4.

Dans des exemples, pour les ressources de types audio, des formats de données compressées appartenant à la pluralité de formats de ressources autorisés peuvent comprendre au moins l'un parmi les formats MP3 ou OGG.

On comprend ici également qu'une liste de formats de ressources interdits aurait également pu être utilisée pour opérer le même fonctionnement. Dans cette alternative, l'opération 126 pourrait alors correspondre à une comparaison d'un format de la ressource avec une pluralité de types de format interdits et ce serait lorsque le format de la ressource correspondrait à un format interdit de la liste que le téléchargement serait interdit.

Comme expliqué précédemment, le fait de filtrer certaines données d'une page web peut déstructurer son contenu et peut rendre la compréhension de l'information présentée plus difficile. Le procédé propose ainsi la mise en œuvre d'exemples permettant d'atténuer cet effet. Ces exemples sont notamment illustrés en [Fig.8]. En particulier, le procédé propose de remplacer une ressource comprenant un élément graphique à afficher sur la page web dont le téléchargement aurait été interdit par un élément graphique de substitution. Un élément graphique d'une page web peut désigner tout élément destiné à être affiché sur une page web.

En particulier, dans ces exemples, le procédé 100 peut comprendre trois opérations 140, 150 et 160 supplémentaires, comme illustré sur la [Fig.8].

L'opération 140 correspond à une obtention des dimensions de l'élément graphique qui était destiné à être affiché avant l'interdiction du téléchargement de la ressource.

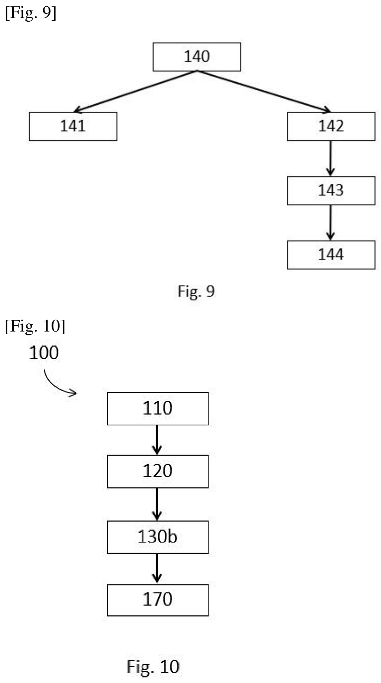

L'opération 150 correspond à la détermination d'un élément graphique de substitution présentant les dimensions déterminées lors de l'opération 140 (i.e. les dimensions de l'élément graphique qui était destiné à être affiché avant l'interdiction du téléchargement de la ressource). L'élément graphique de substitution déterminé peut par exemple correspondre à une forme géométrique présentant les dimensions de l'image. Il peut par ailleurs comprendre un élément interactif, comme cela sera détaillé en référence à la [Fig.10].

L'opération 160 correspond à une modification du code HTML de la page web afin que l'élément graphique de substitution se positionne à l'emplacement de l'élément graphique qui était destiné à être affiché lors de l'affichage de la page web.

On comprend donc que la mise en œuvre des opérations 140, 150 et 160 permet de remplacer l'élément graphique de la ressource dont le téléchargement a été interdit (du fait d'au moins l'un parmi son type, son poids, ou sa taille) par un élément présentant des dimensions et un positionnement correspondant, conservant ainsi la structure originelle de la page web afin de faciliter la compréhension de son contenu pour l'utilisateur.

Plusieurs options permettant d'obtenir les dimensions de l'élément graphique lors de l'opération 140 sont détaillées ci-après et dépendent notamment des données disponibles dans le code HTML.

Dans une première option, les dimensions de l'élément graphique qui était destiné à être affiché peuvent être obtenus à partir du code HTML de la page. Ces dimensions peuvent en particulier être obtenues à partir des informations comprises dans la balise associée à la ressource dans le code HTML. Il peut être identifié une chaine de caractères correspondant à une largeur de l'élément graphique. Il peut être identifié une chaine de caractères correspondant à une hauteur de l'élément graphique.

Ainsi, dans des exemples, l'opération 140 de détermination des dimensions
de l'élément graphique de la ressource dont le téléchargement a été interdit peut comprendre une opération 141 d'obtention des dimensions de l'élément graphique à partir des informations comprises dans la balise associée à la ressource dans le code HTML. Ces exemples sont notamment illustrés sur la [Fig.9].

On comprend que, dans la première option, il n'est pas nécessaire de télécharger d'autres données que celles présentes dans le code HTML pour déterminer les dimensions de l'élément graphique de la ressource.

Dans une deuxième option, les dimensions de l'élément graphique qui était destiné à être affiché peuvent être obtenues à partir d'une requête adaptée à destination du serveur web stockant la ressource. En effet, en fonction de la ressource dont il est question, notamment en fonction de son format, il est possible de déterminer ses dimensions en demandant des parties précises de la ressource qui indiquent ces informations.

Ainsi, dans des exemples, l'opération 140 de détermination des dimensions
de l'élément graphique de la ressource dont le téléchargement a été interdit peut comprendre trois opérations 142, 143 et 144 supplémentaires. Ces exemples sont notamment illustrés sur la [Fig.9].

L'opération 142 correspond à une obtention du format de la ressource considérée. La présente divulgation a déjà proposé plusieurs manières d'obtenir le format de la ressource qui peuvent être utilisées ici. Il est à noter que si le format de la ressource a déjà été obtenu à ce stade du procédé, il n'est pas nécessaire que ce format soit déterminé une nouvelle fois.

L'opération 143 correspond à un envoi, au serveur web hébergeant la ressource, d'une requête HTTP afin d'obtenir une partie de la ressource associée à une de ses dimensions. La partie de la ressource associée à une de ses dimensions peut être déterminée à partir du format de la ressource obtenue lors de l'opération 142. Il a déjà été détaillé une façon d'obtenir une partie de la ressource précédemment, de sorte que ce même fonctionnement peut être appliqué ici.

L'opération 144 correspond à une obtention d'une réponse du serveur web. La réponse du serveur web correspond ainsi à la dimension demandée lors de l'opération précédente.

Il est à noter que les opérations 143 et 144 peuvent être mises en œuvre une première fois pour déterminer la largeur et une deuxième fois pour déterminer la hauteur de la ressource.

La deuxième option peut être utilisée alternativement à la première option. Dans des exemples, la deuxième option est avantageusement utilisée seulement si les dimensions de la ressource concernée ne sont pas présentes dans le code HTML (i.e. si la première option ne peut pas être utilisée). En effet, cette deuxième option demande la transmission d'une petite quantité de données en provenance du serveur, de sorte qu'elle est moins efficace du point de vue de la minimisation de l'empreinte carbone que la première option.

Bien que le filtrage proposé par la présente divulgation cible certaines ressources plus que d'autres dans la mesure où ces ressources sont censées avoir un impact limité sur la compréhension du contenu de la page web, ces ressources ne sont pas analysées à priori (puisque cela demanderait leur téléchargement) de sorte qu'elles peuvent tout de même présenter du sens, pour l'utilisateur, dans le cadre de sa compréhension du contenu de la page. Par conséquent, la présente divulgation propose également des exemples de procédés permettant à l'utilisateur de tout de même télécharger la ressource dont le téléchargement aurait été interdit lors de l'opération 130b afin qu'il puisse éventuellement accéder au contenu de la ressource s'il le souhaite.

Par conséquent, dans des exemples, le procédé peut comprendre une opération 170 d'obtention d'un élément interactif à afficher sur la page web qui, lorsqu'il est actionné, permet d'autoriser le téléchargement de la ressource. L'élément interactif peut par exemple correspondre à un bouton. L'élément interactif peut être accompagné d'un texte. Le texte peut par exemple indiquer qu'un appui sur l'élément interactif permettra de télécharger la ressource. Le texte accompagnant l'élément interactif peut, en alternative ou en complément de l'information selon laquelle un appui sur cet élément permettra de télécharger la ressource, indiquer un poids de la ressource qui sera téléchargée. Ces exemples sont notamment illustrés en [Fig.10]. Il est à noter que l'élément interactif peut correspondre à une partie de l'élément de substitution décrit précédemment. La combinaison de l'élément interactif et de l'élément de substitution est particulièrement intéressante dans la mesure où l'utilisateur saura déterminer plus facilement quelle ressource sera téléchargée en actionnant cet élément au regard de sa position dans la page, et du contenu qui entoure la ressource dans cette page. Il saura en particulier s'il est ou non nécessaire pour sa compréhension de télécharger la ressource au regard du contenu entourant cette ressource dans la page web. Notamment, dans une situation concrète où le contenu de la page web à proximité de la ressource fait référence à une vidéo explicative, ou encore à un schéma de fonctionnement d'un système, que l'utilisateur ne peut pas retrouver ces données qui auraient été filtrées, il comprendra directement que c'est l'élément interactif, par exemple le bouton, positionné à l'endroit où devrait se trouver le schéma ou la vidéo qui lui permettra de télécharger la ressource qu'il souhaite, et pas une autre ressource de la page qui aurait également été filtrée. Par ailleurs, lorsque le poids de la ressource est également indiqué, l'utilisateur disposera d'une information supplémentaire sur l'impact carbone de cette ressource afin de décider ou non de télécharger la ressource. Le poids peut notamment être déterminé par l'une ou plusieurs des options décrites dans la présente divulgation s'il n'a pas déjà été déterminé à ce stade du procédé.

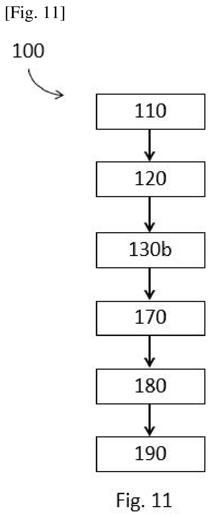

Dans des exemples dans lesquels le procédé comprend l'opération 170 de détermination d'un élément interactif et dans lesquels l'élément interactif autorisant le téléchargement de la ressource est actionné, le procédé peut en outre comprendre deux opérations supplémentaires 180 et 190. Ces exemples sont notamment illustrés sur la [Fig.11].

L'opération 180 correspond à un envoi, à un serveur web spécifique, d'une instruction de téléchargement de la ressource.

L'opération 190 correspond à une réception, du serveur web spécifique, de la ressource préalablement compressée.

Ces opérations permettent ainsi d'obtenir la ressource dans un format compressé plutôt que de la télécharger dans un format plus lourd.

En l'occurrence, le serveur spécifique peut être un serveur destiné à recevoir ce type de requêtes et servant de base de données aux ressources à télécharger pour plusieurs utilisateurs. Par conséquent, une fois que le serveur spécifique a téléchargé une première fois une ressource d'une page web et qu'il l'a compressée, un utilisateur (qu'il s'agisse du même utilisateur ou non) qui souhaiterait télécharger cette même ressource recevrait la ressource compressée de la part du serveur. Bien que le procédé soit présenté du point de vue d'un utilisateur, on comprend que ces opérations 180 et 190 dans le cadre d'un tel procédé utilisé par plusieurs utilisateurs permettraient de réduire l'empreinte carbone provoqué par le téléchargement de la ressource dès la deuxième requête en téléchargement de cette ressource auprès du serveur.

La solution proposée par la présente divulgation permet ainsi de réduire l'empreinte carbone de la navigation web, et notamment de la consultation d'une page web par un utilisateur par l'intermédiaire d'un filtrage de certaines ressources comprises dans la page web. A titre accessoire, la solution permet également de faciliter l'accès au contenu pertinent de pages web dans des zones de faibles débits réseaux. Par ailleurs, le fait de filtrer certaines données peut gêner certains utilisateurs dans la compréhension du contenu de la page web, notamment dans la mesure où cela peut déstructurer la page web ou dans la mesure où ces données seraient porteuses de sens pour ces utilisateurs, de sorte que certains exemples de la solution permettent, soit de restructurer le contenu de la page par des éléments de substitutions des données filtrées, soit de télécharger les données dans des formats compressées afin d'atténuer ces problèmes de compréhension tout en réduisant toujours l'impact carbone de la consultation de la page.

## Revendications

1. Procédé (100), mis en œuvre par ordinateur, comprenant :
détecter (110) un évènement correspondant au pré-téléchargement d'une ressource durant l'interprétation d'un code en langage de balisage hypertexte d'une page web, ci-après désigné par code HTML de la page web ;
déterminer (120) si la ressource doit être téléchargée à partir d'au moins l'un parmi son type, son format, ou son poids ; et
autoriser (130a) ou interdire (130b) le téléchargement de la ressource.

2. Procédé selon l'une quelconque des revendications précédentes, dans lequel déterminer (120) si la ressource détectée doit être téléchargée à partir de son type comprend :
obtenir (121) le type de la ressource ; puis comparer (122) le type de la ressource avec une pluralité de types de ressources interdits ; et
lorsque le type de la ressource correspond à un type de ressources interdit,
interdire (130b) le téléchargement de la ressource.

3. Procédé selon l'une quelconque des revendications précédentes, dans lequel déterminer (120) si la ressource détectée doit être téléchargée à partir de son poids comprend :
obtenir (123) un poids de la ressource à partir du code HTML de la page web ; puis
comparer (124) le poids de la ressource avec un seuil ; et
lorsque le poids de la ressource est supérieur au seuil, déterminer (124) que la ressource ne doit pas être téléchargée, et
interdire (130b) le téléchargement de la ressource.

4. Procédé selon la revendication précédente, dans lequel obtenir (123) un poids de la ressource à partir du code HTML de la page web comprend :
envoyer (1232), au serveur web hébergeant la ressource, une requête du protocole de transfert hypertexte, ci-après désignée par requête HTTP, afin d'obtenir une partie de la ressource ;
obtenir (1233) une réponse du serveur web à la requête HTTP ; et déterminer (1234) le poids de la ressource à partir de la réponse obtenue du serveur web.

5. Procédé selon la revendication 3, dans lequel obtenir (123) un poids de la ressource à partir du code HTML de la page web comprend :
envoyer (1235), au serveur web hébergeant la ressource, une requête du protocole de transfert hypertexte, ci-après désignée par requête HTTP, afin d'obtenir des métadonnées associées à la ressource ;
obtenir (1236) une réponse du serveur web à la requête HTTP ; et déterminer (1237) le poids de la ressource à partir de la réponse obtenue du serveur web.

6. Procédé selon l'une quelconque des revendications précédentes, dans lequel, lorsque la ressource comprend un élément graphique destiné à être affiché sur la page web et que le téléchargement de cette ressource (130b) est interdit, le procédé comprend en outre :
obtenir (140) des dimensions de l'élément graphique ;
déterminer (150) un élément graphique de substitution présentant les dimensions déterminées ; et
modifier (160) le code HTML de la page web afin que l'élément graphique de substitution se positionne à l'emplacement de l'élément graphique lors d'un affichage de la page web.

7. Procédé selon l'une quelconque des revendications précédentes, dans lequel, lorsque le téléchargement de la ressource (130b) est interdit, le procédé comprend en outre :
obtenir (170) un élément interactif à afficher sur la page web qui, lorsqu'il est actionné, permet d'autoriser le téléchargement de la ressource.

8. Procédé selon la revendication précédente, comprenant en outre, suite à l'actionnement de l'élément interactif autorisant le téléchargement de la ressource :
un envoi (180), à un serveur web spécifique, d'une instruction de téléchargement de la ressource ; puis
une réception (190), du serveur web spécifique, de la ressource préalablement compressée par le serveur web spécifique.

9. Produit programme d'ordinateur comportant des instructions pour la mise en œuvre de l'un quelconque des procédés selon les revendications 1 à 8 lorsque ce programme est exécuté par un dispositif de traitement de données.

10. Navigateur web configuré pour la mise en œuvre de l'un quelconque des procédés selon les revendications 1 à 8 lorsque ce navigateur web est exécuté par un dispositif de traitement de données.
